(19) Europäisches Patentamt
European Patent Office
Office européen des brevets

(11) **EP 1 174 695 B1**

(12) **FASCICULE DE BREVET EUROPEEN**

(45) Date de publication et mention
de la délivrance du brevet:
**04.01.2012 Bulletin 2012/01**

(51) Int Cl.:
***G01L 5/04*** *(2006.01)*   ***G01B 5/28*** *(2006.01)*
***G01B 7/34*** *(2006.01)*   ***B21B 38/02*** *(2006.01)*
***G01B 5/207*** *(2006.01)*   ***G01B 7/287*** *(2006.01)*

(21) Numéro de dépôt: **01401925.1**

(22) Date de dépôt: **18.07.2001**

(54) **Rouleau de mesure de planéité**

Rolle zur Messung der Ebenheit

Roller for measuring evenness

(84) Etats contractants désignés:
**AT BE CH CY DE DK ES FI FR GB GR IE IT LI LU MC NL PT SE TR**

(30) Priorité: **20.07.2000 FR 0009543**

(43) Date de publication de la demande:
**23.01.2002 Bulletin 2002/04**

(73) Titulaire: **Siemens VAI Metals Technologies SAS**
**42403 Saint Chamond (FR)**

(72) Inventeurs:
• **Perenon, Rémi**
**42390 Villars (FR)**

• **Faure, Jean-Paul**
**95610 Eragny sur Oise (FR)**

(74) Mandataire: **Fischer, Michael et al**
**Siemens AG**
**Postfach 22 16 34**
**80506 München (DE)**

(56) Documents cités:
**EP-A- 0 262 002    EP-A- 0 270 442**
**AT-B- 370 521    JP-A- 62 047 529**

# Description

L'invention a pour objet un rouleau de mesure, au défilé, de la répartition des contraintes appliquées sur une bande, utilisable spécialement pour détecter les défauts de planéité d'une tôle métallique.

Lors du laminage de bandes de métal et notamment de tôles minces laminées à froid, il apparaît des défauts de planéité provenant, en particulier, de légères variations, sur la largeur de la bande, de l'allongement réalisé par le laminage.

Il en résulte des défauts de planéité qui peuvent être corrigés en agissant sur les conditions de laminage et, en particulier, sur la répartition, dans le sens transversal, de la pression de serrage appliquée entre les cylindres de travail.

Dans les laminoirs modernes, en effet, il est possible d'agir localement sur la répartition des contraintes, par exemple par effet thermique, au moyen de systèmes d'arrosage fractionné, ou bien par effet mécanique, en exerçant des efforts de cambrage sur les extrémités des cylindres de travail. On peut aussi utiliser un cylindre de soutien comprenant une enveloppe déformable montée rotative autour d'un arbre fixe et prenant appui sur celui-ci par une pluralité de vérins qui peuvent être réglés en position et en pression.

Pour détecter les défauts à corriger, on fait passer la bande sur un dispositif de mesure, placé en aval du laminoir, et sensible aux variations, sur la largeur de la bande, de l'effort de traction appliqué sur celle-ci.

Un tel dispositif de mesure est constitué, habituellement, d'un rouleau déflecteur comprenant un corps cylindrique monté rotatif autour d'un axe perpendiculaire à la direction longitudinale de défilement de la bande qui est appliquée sous tension sur un secteur angulaire de ce rouleau.

Une série de capteurs répartis sur la face externe cylindrique du rouleau permettent de mesurer les variations de la pression locale d'application de la bande. Habituellement, ces détecteurs sont régulièrement écartés les uns des autres et répartis sur toute la longueur du rouleau, la bande pouvant ainsi être divisée en une série de zones adjacentes de largeur correspondant à l'espacement transversal entre les capteurs.

D'autre part, pour éviter des interférences entre les mesures effectuées sur deux zones adjacentes, les capteurs sont avantageusement décalés angulairement d'une zone à la suivante.

Dans un mode de réalisation connu décrit, par exemple, dans le document AT-B-370521, le rouleau déflecteur est constitué de segments annulaires juxtaposés comportant chacun au moins un capteur de force placé dans un logement ménagé dans l'épaisseur du segment et constitué d'un transducteur piezo-électrique interposé entre le fond du logement et une pièce de protection qui ferme le logement vers l'extérieur.

Une telle disposition permet de bien dissocier les zones de mesure de la bande, mais il est difficile d'assurer une jonction parfaite entre deux segments adjacents. Il en résulte des risques de marquage de la bande dus au dépôt d'impuretés le long de chaque plan de joint entre deux segments.

Dans une autre disposition, décrite dans le document JP-A-62-047529, le rouleau déflecteur est constitué d'un corps tubulaire dans lequel sont percés une pluralité d'alésages radiaux formant chacun un logement pour un boîtier cylindrique dont le fond est constitué d'une paroi mince qui se raccorde tangentiellement à la face externe du corps tubulaire. Un capteur, du type à magnétostriction, est appliqué sur la face interne de cette paroi.

Dans les deux cas, par conséquent, chaque zone de mesure est associé à un capteur de force auquel la pression appliquée par la bande est transmise par la paroi de protection. La résistance propre de cette paroi interposée entre le capteur et la bande risque d'affecter la mesure de pression d'une façon difficile à apprécier. D'autre part, la mesure peut aussi être perturbée par des influences extérieures résultant par exemple de la dilatation du rouleau due à la température de la bande ou de sa déformation sous l'effet des charges appliquées et qui risquent de provoquer un coincement de la paroi de protection.

Pour éviter ces perturbations, on peut laisser un léger jeu à la périphérie de la paroi de fermeture mais il en résulte encore un risque de marquage dû au dépôt d'impuretés sur le pourtour de la paroi.

De tels inconvénients sont évités dans un autre type de rouleau de mesure de planéité, qui a été développé par la société déposante depuis plusieurs années et dans lequel on met à profit les déformations de la paroi de protection, pour en déduire, par le calcul, les variations de la pression appliquée par la bande. Ainsi, au lieu de perturber la mesure de pression, la paroi qui recouvre le capteur devient le moyen de mesure directe de cette pression.

Pour cela, on utilise non pas des capteurs de force, mais des capteurs de déplacement du type palpeurs qui, dans chaque zone sensible, mesurent directement la flèche résultant de la pression appliquée. Ainsi, en appliquant les formules de la Résistance des Matériaux, il est possible de déterminer par le calcul les variations de cette pression à partir de la mesure de la flèche et ce calcul ne risque pas d'être affecté par des perturbations extérieures car les palpeurs de mesure peuvent être étalonnés en effectuant une mesure à vide de façon à tenir compte uniquement de la déformation due aux contraintes appliquées par la bande. Ce type de rouleau de mesure de planéité est décrit dans le document EP-0-262-002-A1.

D'autre part, pour éviter les risques de marquage, on a proposé de recouvrir l'ensemble du rouleau d'une surface continue. Dans une telle disposition décrite, par exemple, dans les brevets européens EP-028.191 OU EP-0.270.442 de la même société, le rouleau déflecteur comprend un corps central constitué d'une paroi tubulaire assez épaisse pour donner la résistance nécessaire et sur lequel est enfilée une enveloppe mince continue qui est, généralement, appliquée par frettage, les capteurs étant placés dans des alésages ménagés dans le corps central et fermés, vers l'extérieur, par la partie correspondante de l'enveloppe mince. Cette partie de l'enveloppe forme une zone sensible et l'on peut considérer que celle-ci se comporte comme une plaque mince, normalement circulaire, et encastrée sur sa périphérie, cette plaque étant soumise à une pression uniforme. On sait que, dans ce cas, la flèche au centre de la plaque est donnée par une formule du type :

$$(1) \qquad f = Kp\, D^2 / e^3$$

D étant le diamètre de la plaque et (e) son épaisseur.

La zone de mesure étant dimensionnée pour une sensibilité déterminée, il apparaît que la flèche (f) mesurée au centre de la plaque par le palpeur est proportionnelle à la pression appliquée (p) qui est elle-même proportionnelle à la traction de la bande dans la zone correspondante.

Sur chaque zone de mesure, la flèche est mesurée par comparaison des positions, respectivement à vide et en charge, de l'élément mobile du palpeur qui prend appui au centre de la plaque. Il est ainsi possible, en comparant les mesures effectuées par les différents capteurs, de déterminer les variations de la contrainte de traction dans des zones adjacentes réparties sur la largeur de la bande.

L'utilisation d'une enveloppe mince recouvrant l'ensemble du rouleau présente, comme on l'a vu, l'avantage d'éviter tout risque de marquage. Toutefois, le montage de celle-ci par frettage à chaud est assez complexe.

D'autre part, on ne peut éviter la détérioration et l'usure de la face externe du rouleau sur lequel la bande est appliquée sous traction et défile à grande vitesse. Il faut donc, périodiquement, rectifier cette face externe et même remplacer la frette en cas d'usure excessive et, pour cela, il est nécessaire, tout d'abord, de démonter l'ensemble des capteurs. Même si l'on utilise le montage sur barrettes amovibles qui fait l'objet du brevet européen 0.270.442 déjà cité, de telles opérations sont complexes et onéreuses car il est généralement nécessaire d'enlever le rouleau déflecteur pendant une période assez longue, ce qui entraîne un arrêt de production.

L'invention a pour objet de remédier à ces inconvénients grâce à une nouvelle disposition permettant de simplifier la réalisation du rouleau et les opérations d'entretien et donnant, en particulier, la possibilité d'intervenir ponctuellement sur l'un ou l'autre des capteurs sans démontage de l'ensemble.

L'invention concerne donc, d'une façon générale, un rouleau de mesure de la répartition des contraintes sur une bande défilant suivant une direction longitudinale et appliquée sur ledit rouleau, ce dernier comprenant un corps tubulaire monté rotatif autour d'un axe perpendiculaire à la direction de défilement et portant une pluralité d'organes de mesure sensibles à une pression locale d'application de la bande et montés chacun dans un logement limité par une face latérale et fermé, vers l'extérieur, par une paroi ayant une face externe cylindrique de même rayon de courbure que la face externe du rouleau, chaque organe de mesure étant un capteur de déplacement du type palpeur comprenant un élément mobile monté coulissable radialement sur un élément fixe et appliqué, vers l'extérieur, sur la face interne de la paroi de fermeture du logement.

Conformément à l'invention, chaque logement d'un capteur est fermé individuellement par une pièce creuse en forme de couvercle ayant un fond constitué d'une plaque mince élastiquement déformable et solidaire d'une partie périphérique en forme de douille limitée par deux faces latérales respectivement interne et externe, la face externe ayant un profil, en section transversale, identique à celui de la face latérale du logement, de façon que le couvercle s'emboîte sans jeu dans ledit logement en prenant appui, par une extrémité de la douille, sur une partie du corps tubulaire, dans une position pour laquelle la face externe du fond se trouve dans le prolongement de la face externe du rouleau, les faces latérales en regard du logement et de la douille, étant appliquées l'une sur l'autre sur une hauteur suffisante pour que ladite douille consitue un moyen d'encastrement de la plaque mince capable de résister aux moments de flexion résultant de la pression appliquée par la bande, sans risque de décollement le long du joint entre la face externe du couvercle et la face externe du corps tubulaire.

De façon avantageuse, la face latérale interne de la douille d'encastrement se raccorde, par un congé arrondi, à la face interne de la plaque déformable sur laquelle prend appui l'élément mobile du palpeur.

Dans un mode de réalisation préférentiel, chaque couvercle d'un logement est associé à un moyen de maintien permanent de l'application l'une sur l'autre des faces latérales en regard du logement et de la douille.

De façon particulièrement avantageuse, ce moyen de maintien est constitué d'une pièce de butée placée dans le logement et s'étendant en saillie à l'intérieur de la douille du couvercle, ladite pièce de butée étant limitée par une face latérale ayant un profil identique, en section transversale, à celui de la face latérale interne de la douille, de façon à ménager, entre ladite pièce de butée et la face latérale du logement, un espace annulaire dans lequel la douille du couvercle s'emboîte sans jeu, vers l'intérieur et vers l'extérieur.

Selon une autre caractéristique préférentielle, la pièce de butée est limitée, vers l'extérieur, par une face frontale d'extrémité, écartée de la face interne de la paroi mince déformable par un léger jeu correspondant à une déformation maximale dans le domaine élastique de la paroi mince sous l'effet d'une pression locale d'application de la bande, et sur laquelle vient prendre appui ladite paroi mince en cas de pression excessive, ladite face frontale étant percée d'un orifice de passage avec jeu de l'élément mobile du palpeur.

D'autre part, la pièce de butée peut être munie, au niveau du fond du logement, d'une partie élargie formant un rebord périphérique sur lequel vient prendre appui la douille d'encastrement du couvercle, dans la position enfoncée de celui-ci pour laquelle la face externe de la paroi mince est dans le prolongement de la face externe du corps tubulaire, la face latérale interne de la douille étant bordée par une rainure ayant un fond annulaire sur lequel vient prendre appui le rebord périphérique de la pièce de butée. De la sorte, la douille d'encastrement du couvercle prend appui sur le fond du logement au niveau de sa face latérale interne, ce qui favorise l'effet d'encastrement.

Grâce à ces dispositions, le couvercle peut être simplement emboîté à force dans l'espace annulaire entre la pièce de butée et la face latérale du logement. Cependant, on peut aussi coller l'une sur l'autre les faces latérales en regard de la douille d'encastrement du couvercle et de la pièce de butée, les deux pièces étant facilement démontables ensemble de façon à permettre une intervention ponctuelle sur une zone de mesure sans être obligé de démonter l'ensemble des palpeurs.

D'autres caractéristiques avantageuses font l'objet de revendications secondaires.

Mais l'invention sera mieux comprise par la description suivante d'un mode de réalisation particulier, donné à titre d'exemple et représenté sur les dessins annexés.

La figure 1 est une vue en coupe transversale d'un rouleau de mesure selon l'invention.
La figure 2 est une vue en coupe longitudinale, selon II-II de la figure 1, de l'ensemble d'un capteur de mesure.
La figure 3 est une vue de dessus d'une partie du rouleau, avec enlèvement du couvercle d'un capteur.
La figure 4 montre, en coupe transversale, l'ensemble des pièces du capteur avant montage.
La figure 5 est une vue de détail, à échelle agrandie, d'une zone de mesure.

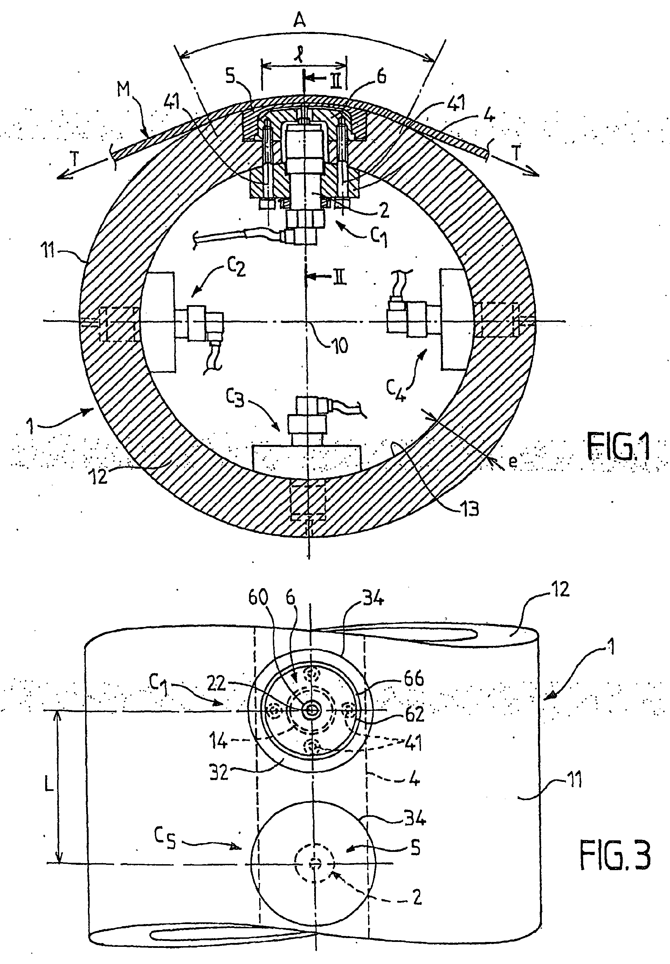

Sur la figure 1, on a représenté, en coupe transversale, un rouleau de mesure de planéité 1 qui constitue, comme habituellement, un rouleau déflecteur pour une bande métallique (M) qui défile suivant une direction longitudinale perpendiculaire à l'axe de rotation 10 du rouleau et s'enroule sur un secteur angulaire A de celui-ci. La bande (M) est maintenue sous traction et est donc appliquée sur la surface externe 11 du rouleau 1 sous une pression qui est donnée par la formule :

$$(2) \qquad p = T / R$$

(T) étant la contrainte de traction par unité de largeur de bande et (R) le rayon de la face externe 11 du rouleau.

Le rouleau déflecteur selon l'invention est du type à capteur de déplacement qui fait l'objet du brevet européen EP-0.028.191 de la même société. Il est donc équipé d'une pluralité de capteurs qui sont écartés l'un de l'autre transversalement et angulairement. Comme indiqué dans le brevet précédent EP-0.028.191, les différents capteurs sont avantageusement répartis sur une courbe en hélice qui s'enroule sur la face externe du rouleau déflecteur. Chaque capteur de déplacement comprend une paroi déformable formant une zone de largeur (I) sensible à la pression appliquée par une zone élémentaire correspondante de la bande. Deux capteurs adjacents C1, C2 sont donc décalés, dans le sens transversal, de la même distance (I).

Dans le mode de réalisation représenté sur la figure 1, le rouleau déflecteur 1 est muni de quatre séries de capteurs de déplacement centrés sur deux plans diamétraux perpendiculaires. Le pas (L) de l'hélice doit donc être de quatre fois la largeur (I) d'une zone sensible pour couvrir toute la largeur de la bande sans perte d'informations. Toutefois, il peut aussi être réduit de façon à augmenter la résolution du rouleau.

Bien entendu, des moyens de traitement des signaux permettent de différencier les mesures effectuées par les capteurs.

D'une façon générale, chaque capteur est donc associé à une zone sensible, de largeur (I) ménagée sur la surface du rouleau et dont les déformations sont mesurées par un palpeur 2.

Le rouleau 1 comprend un corps tubulaire 12 constitué d'une paroi ayant une épaisseur (e) suffisante pour résister aux efforts de flexion résultant de l'application de la bande sous traction. Chaque palpeur 2 est monté au centre d'un logement 3 comprenant un alésage 31 ménagé radialement dans le corps tubulaire 12 et qui débouche, vers l'extérieur, dans un lamage 32 centré sur l'axe 30 de l'alésage 31 et ménagé sur une partie de l'épaisseur (e) du rouleau. Ce lamage 32 est donc limité par un fond annulaire plan 33 perpendiculaire à l'axe 30 de l'alésage 31 et une paroi latérale 34 orthogonale au fond 33. Normalement, le lamage 32 est circulaire et la paroi latérale 34 présente un profil cylindrique centré sur l'axe 30 et ayant un diamètre (d) supérieur à la largeur (I) d'une zone élémentaire de mesure de la bande.

Chaque palpeur 2 comprend un élément fixe 21 qui est enfilé avec jeu dans l'alésage 31 du corps tubulaire 12 et dans lequel est monté coulissant, axialement, un élément mobile 22 qui débouche vers l'extérieur dans le lamage 3, lorsque le palpeur 2 est fixé sur le rouleau.

De préférence, selon la disposition décrite dans le brevet EP-0.270.442, les palpeurs d'une même série sont montés sur une barrette 4 s'étendant transversalement sur toute la largeur du rouleau et appliquée sur la face interne 13 du corps tubulaire 12, la barrette 2 étant munie d'une face d'application cylindrique de profil conjugué.

Il est ainsi possible de fixer à l'avance les palpeurs 2 d'une même série sur une barrette 4 qui est enfilée à l'intérieur du rouleau et fixée sur la face interne 13 de celui-ci par des vis 41.

Comme on l'a indiqué, l'invention permet de supprimer l'enveloppe mince frettée qui, dans les dispositions précédentes, recouvrait entièrement le corps tubulaire 12. Dans l'invention, au contraire, la bande M est appliquée directement sur la face externe cylindrique 11 du corps tubulaire 12 et chaque lamage 3 dans lequel est placé un palpeur 2 débouche sur cette face externe 11, par un orifice 35 qui est fermé par un couvercle 5 ayant une face externe cylindrique 51 de même rayon de courbure que la face externe 11 du corps tubulaire et qui vient se placer dans le prolongement de celle-ci pour rétablir la continuité de la surface du rouleau, lorsque le couvercle 5 est enfoncé dans le lamage 32.

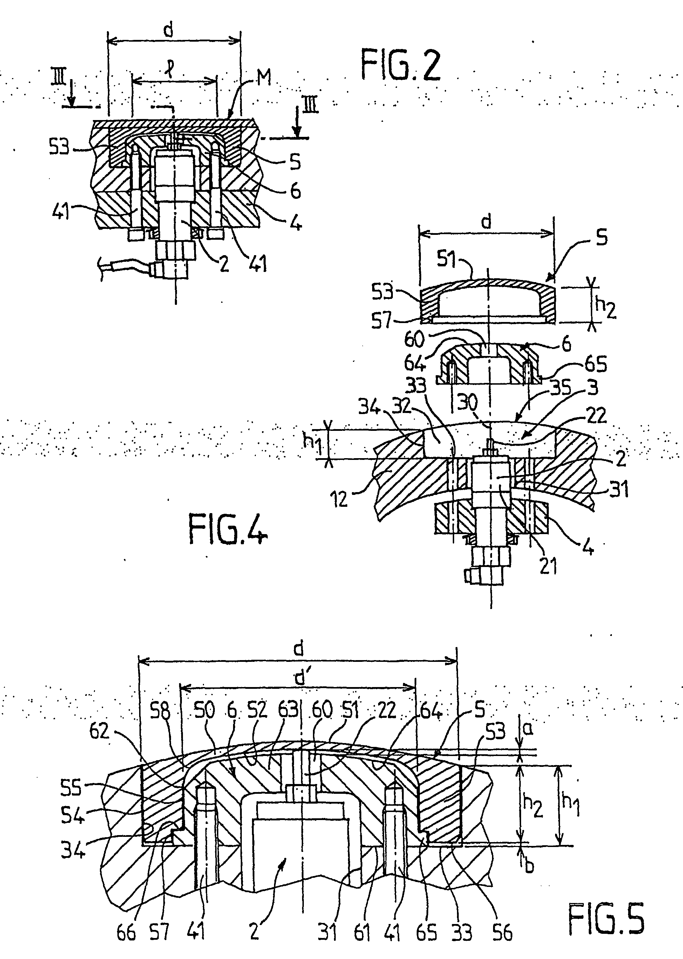

Comme indiqué en détail sur la figure 5, chaque couvercle 5, constitue une pièce creuse en forme de calotte comprenant un fond 50 constitué d'une paroi mince ayant une face externe 51 et une face interne 52 et une partie latérale 53 constituée d'une douille cylindrique ayant deux faces latérales, respectivement externe 54 et interne 55, et une face d'extrémité 56.

La face latérale externe 54 du couvercle 5 a un diamètre (d) exactement égal au diamètre de la face latérale 34 du lamage 32 de telle sorte que la douille 53 du couvercle 5 s'emboîte sans jeu dans le lamage 32 jusqu'à ce que son extrémité 56 prenne appui sur le fond 33 du lamage dans une position enfoncée pour laquelle la face externe 51 du couvercle 5 se trouve exactement dans le prolongement de la face externe 11 du corps tubulaire 12.

Dans cette position, les deux faces latérales en regard, respectivement 54 du couvercle 5 et 34 du lamage 32 sont enfilées l'une sur l'autre. Les dimensions de la douille 53, respectivement son épaisseur e1 et sa hauteur h2, sont déterminées de façon que la paroi mince 50 se comporte comme une plaque circulaire encastrée par sa périphérie sur la douille 53 dont aucune partie ne peut tourner sous l'effet des moments résultant de la pression appliquée sur la paroi mince 50 et qui forme ainsi un pied d'encastrement périphérique de la paroi déformable 50.

L'élément mobile 22 du palpeur 2 vient s'appliquer sur la face interne 52 de la paroi mince 50 et détecte donc exactement les déformations de celle-ci. Comme on l'a indiqué, du fait que la paroi 50 est encastrée sur sa périphérie, la flèche (f) mesurée par le palpeur est proportionnelle à la pression (p) elle même proportionnelle à la traction appliquée sur la bande dans la zone correspondante de celle-ci.

Pour cela, il faut que la face latérale externe 54 de la douille 53 soit maintenue, en permanence, appliquée contre la face latérale 34 du lamage 32.

A cet effet, la hauteur h2 et l'épaisseur e1 de la douille 53 peuvent être déterminées de façon que, après emboîtement du couvercle 5 dans le logement 32, la douille 53 constitue par elle même un moyen d'encastrement périphérique de la plaque mince 50.

Cependant, pour garantir cet encastrement, il es préférable que, comme représenté sur les dessins, la douille 53 soit maintenue emboîtée sans jeu, non seulement vers l'extérieur par la face latérale 34 du lamage mais également vers l'intérieur, par une pièce de butée 6 fixée au centre du logement 3 du palpeur 2.

Cette pièce de butée 6 est en forme de chapeau avec une extrémité 61 formant une face plane annulaire d'appui sur une partie interne du fond annulaire 33 du lamage 32 et une face latérale cylindrique 62 ayant un diamètre (d') identique à celui de la face latérale interne 55 de la douille 53.

Comme le montre la figure 4, la pièce de butée 6 s'étend donc en saillie au centre du logement constitué par le lamage 32 en laissant subsister, entre la face latérale 34 du lamage et la face latérale 62 de la pièce de butée, un espace annulaire dont la largeur est exactement égale à l'épaisseur e1 de la douille 53 qui s'emboîte donc sans jeu entre lesdites faces latérales 34 et 62.

La pièce de butée 6 qui peut avoir une épaisseur relativement importante, s'oppose à toute tendance au décollement des faces latérales en regard 54 de la douille et 34 du lamage et garantit donc l'encastrement, sur sa périphérie, de la paroi mince 50.

D'autre part, la pièce de butée 6 est évidée de façon à ménager un espace interne placé dans le prolongement de l'alésage 31 du corps tubulaire et fermé par un fond 63 percé d'un orifice 60 pour le passage de l'élément mobile 22 du palpeur 2 qui vient s'appliquer sur la face interne 52 de la paroi 50.

Pour assurer la proportionnalité entre la pression appliquée par la bande M et la flèche (f) mesurée par le palpeur 2, il est nécessaire que la paroi mince 50 se déforme en restant dans le domaine élastique. Pour cela, il est intéressant de limiter les déformations de la paroi mince 50 et, à cet effet, le fond 63 de la pièce de butée 6 est limité par une face frontale d'extrémité 64 sensiblement parallèle à la face interne 52 de la paroi mince 50 et écartée de celle-ci par un léger jeu (a) déterminé de façon que la paroi mince 50 puisse se déformer sous l'effet de la pression locale d'application de la bande en restant dans le domaine élastique et, en cas de pression excessive, vienne prendre appui sur la face d'extrémité 64 de la pièce de butée 6.

Par ailleurs, la pièce de butée 6 est munie, à son extrémité 61, d'une partie élargie formant une collerette 65 qui s'engage dans une rainure circulaire 57 ménagée sur le bord interne de la face d'extrémité 56 de la douille 53.

Ainsi, lorsque le couvercle 5 est emboîté dans l'espace annulaire entre la pièce de butée 6 et la face latérale 34 du lamage 32, le fond de la rainure 57 vient prendre appui sur une face annulaire 66 de la collerette 65 dont la hauteur est déterminée de façon que, dans cette position, il reste un léger jeu (b) entre la face d'extrémité 56 de la douille 53 et le fond 33 du lamage 32, la hauteur (h2) de la douille 53 étant légèrement inférieure à la profondeur (h1) du lamage 32.

De la sorte, le couvercle 5 prend appui sur le fond du lamage 32 le long de la face latérale interne 55 de la douille 53, ce qui augmente l'effet d'application de la face latérale externe 54 de celle-ci contre la face latérale 34 du lamage 32. Pour assurer une continuité parfaite de la face externe 11 du rouleau et éviter tout risque de décollement et, par conséquent, de dépôt d'impuretés le long de la jonction entre le couvercle 5 et le corps tubulaire 12 il n'est pas nécessaire de souder le bord du couvercle 5, ce dernier pouvant être simplement enfoncé à force dans le lamage 32.

La paroi déformable 50 forme ainsi une plaque circulaire élastique encastrée sur sa périphérie et constitue une zone sensible de diamètre (I) dont la flèche mesurée par le palpeur 2, est proportionnelle à l'effort de traction (T) appliqué dans la partie correspondante, de largeur (I), de la bande (M).

Dans le mode de réalisation représenté sur la figure 1, le rouleau 1 est équipé de quatre séries de capteurs C1, C2, C3, C4 disposés en hélice. Comme le montre la figure 3, le décalage (L) entre deux capteurs C1, C5 d'une même série peut être inférieur à quatre fois le diamètre (I) de la paroi encastrée 50, de façon à améliorer la résolution de la mesure.

Comme indiqué sur les figures, la pièce de butée 6 peut être fixée sur le fond 33 du lamage 32 par les vis 41 de fixation de la barrette 4 sur laquelle sont montés les palpeurs 2. La pièce de butée 6 est alors simplement munie d'alésages filetés qui se placent dans le prolongement des alésages ménagés, dans le corps tubulaire 12 pour l'engagement des vis 41. Comme le montre la figure 3, chaque pièce de butée 6 peut être fixée par quatre vis 41 réparties autour de l'axe du palpeur 2.

Pour améliorer l'effet d'encastrement, sur sa périphérie, de la paroi mince 50 et éviter les concentrations de contraintes, la face interne 52 de la paroi 50 se raccorde à la face latérale interne 55 de la douille 53 par un congé arrondi 58. Au niveau de ce congé, la face latérale 62 de la pièce de butée 6 est limitée par un pan coupé de façon à maintenir la face latérale interne 55 de la douille 53 sur toute sa hauteur.

Bien entendu, le diamètre (I) de la zone sensible est sensiblement inférieur au diamètre (d) du lamage 32 mais il suffit, comme on l'a vu, de régler en conséquence le pas d'écartement des capteurs.

Le couvercle 5 est emboîté sans jeu dans le lamage 32 et est maintenu par la pièce de butée 6. A cet effet, les faces latérales en regard 55 du couvercle et 62 de la pièce de butée 6 peuvent être collées au moyen d'un liant adhésif, les deux pièces étant démontables ensemble par l'extérieur.

Les dispositions selon l'invention permettent donc d'assurer l'encastrement, sur la périphérie, de la plaque sensible 50, sans risque de décollement le long du bord de l'évidement 3 et, ainsi, de garantir la continuité de la face externe du rouleau.

D'autre part, le couvercle 5 n'est pas soudé mais simplement emboîté et peut donc être facilement démonté. Pour cela, il suffit de dévisser les vis 41 du couvercle correspondant seulement à la zone sensible à vérifier, la barrette 4 restant fixée à la paroi tubulaire 12 par les vis de fixation des couvercles des autres capteurs.

Il est donc possible d'intervenir sur un capteur isolé sans avoir à démonter l'ensemble de la série de palpeurs portés par une barrette 4.

En cas de détérioration d'une zone sensible, il suffit de démonter et de remplacer le couvercle correspondant alors que, dans les rouleaux antérieurs à enveloppe frettée, celle-ci devait être détruite par usinage et remplacée par une nouvelle enveloppe.

Bien entendu, l'invention ne se limite pas aux détails du mode de réalisation qui vient d'être décrit à titre d'exemple, d'autres dispositions équivalentes pouvant être utilisées sans s'écarter du cadre de protection défini par les revendications.

En particulier, d'autres moyens peuvent être employés pour fixer le couvercle 5 de façon amovible dans le lamage 32.

Par exemple, le couvercle 5 pourrait être vissé sur la pièce de butée 6, les faces latérales en regard 55 de la douille 53 et 62 de la pièce de butée étant munies de filetages conjugués.

On pourrait aussi utiliser des goupilles enfilées dans des alésages alignés ménagés dans le couvercle 5 et la pièce de butée 6, perpendiculairement à l'axe du capteur.

De plus, le couvercle 5 pourrait être fixé directement sur le fond du lamage 32, la pièce de butée 6 restant en place.

Bien entendu, d'autres moyens tels que, par exemple, un organe de serrage du genre mandrin expansible, pourraient être utilisés comme moyen de maintien pour garantir l'application l'une sur l'autre des faces latérales 54 du couvercle et 34 du lamage 32.

D'autre part, il est avantageux de monter les capteurs sur des barrettes conformément au brevet EP-0.270.442 déjà cité, mais les palpeurs pourraient, aussi, être fixés d'une autre façon sur le corps tubulaire.

Les signes de référence insérés après les caractéristiques techniques mentionnées dans les revendications, ont pour seul but de faciliter la compréhension de ces dernières et n'en limitent aucunement la portée.

**Revendications**

**1.** Rouleau de mesure (1) de la répartition des contraintes sur une bande (M) défilant suivant une direction longitudinale et appliquée sur ledit rouleau, ce dernier comprenant un corps tubulaire (12) monté rotatif autour d'un axe (10) perpendiculaire à la direction de défilement, limité par une face externe cylindrique (11) et portant une pluralité d'organes de mesure (2) sensibles à une pression locale d'application de la bande et montés chacun dans un logement (3) limité par une face latérale (34) centrée sur un axe (30) et fermé, vers l'extérieur, par une pièce creuse (5) en forme de couvercle, comportant un fond (50) ayant une face externe (51) et une face interne (52) et une partie périphérique en forme de douille cylindrique (53) ayant deux faces latérales, respectivement externe (54) et interne 55) et s'emboîtant dans le logement (3) dans une position pour laquelle la face externe (51) du fond (50) du couvercle (5) se trouve dans le prolongement de la face externe (11) corps tubulaire (12), chaque organe de mesure (2) étant un capteur de déplacement du type palpeur comprenant un élément mobile (22) monté coulissable radialement sur un élément fixe (21) et appliqué, vers l'extérieur, sur la face interne (52) du fond (50) de la pièce creuse (5), ledit fond (50) étant constitué d'une plaque mince élastiquement déformable, **caractérisé par le fait que** la face latérale externe (54) de la douille (5) présente un profil cylindrique identique à celui de la face latérale (34) du logement (3), de façon que le couvercle (5) s'emboîte sans jeu dans ledit logement (3) et que les faces latérales en regard (34) du logement (3) et (54) de la douille (53) soient maintenues appliquées l'une sur l'autre sur une hauteur suffisante pour que ladite douille (53) constitue un moyen d'encastrement périphérique capable de résister aux moments de flexion résultant de la pression appliquée sur la plaque mince (50) par la bande (M), sans risque de décollement le long du joint entre la face externe (51) du couvercle (5) et la face externe (11) du corps tubulaire (12)

2. Rouleau de mesure selon la revendication 1, **caractérisé par le fait que** la face latérale interne (55) de la douille d'encastrement (53) se raccorde, par un congé arrondi, à la face interne (52) de la plaque déformable (50) sur laquelle prend appui l'élément mobile (22) du palpeur (2).

3. Rouleau de mesure selon la revendication 1, **caractérisé par le fait que** chaque logement (3) comprend un alésage radial (31) dans lequel est monté le palpeur (2) et qui débouche au centre d'une face annulaire (33) parallèle à l'axe (10) du rouleau (1) et constituant le fond d'un lamage (32) ménagé sur la face externe (11) du corps tubulaire (12) et dans lequel est emboîté sans jeu le couvercle (5).

4. Rouleau de mesure selon l'une des revendications 1, 2, 3, **caractérisé par le fait que** la hauteur (h2) et l'épaisseur (e1) de la douille (53) sont déterminées de façon que ladite douille (53) constitue par elle-même, après emboîtement du couvercle (5), un moyen d'encastrement périphérique pour le fond du couvercle (5) constituant une plaque mince (50).

5. Rouleau de mesure selon l'une des revendications 1, 2 et 3, **caractérisé par le fait que** chaque couvercle (5) d'un logement (3) est associé à un moyen (6) de maintien permanent de l'application l'une sur l'autre des faces latérales en regard (34) du logement (3) et (54) de la douille (53).

6. Rouleau de mesure selon la revendication 5, **caractérisé par le fait que** le moyen de maintien de l'application l'une et l'autre des faces en regard (54) de la douille (53) et (34) du logement (3) comprend une pièce de butée (6) placée dans le logement (3) et s'étendant en saillie à l'intérieur de la douille (53) du couvercle (5), ladite pièce de butée (6) étant limitée par une face latérale (62) ayant un profil identique, en section transversale, à celui de la face latérale interne (55) de la douille (53), de façon à ménager, entre ladite pièce de butée (6) et la face latérale (34) du logement (3), un espace annulaire dans lequel la douille (53) du couvercle (5) s'emboîte sans jeu, vers l'intérieur et vers l'extérieur.

7. Rouleau de mesure selon la revendication 6, **caractérisé par le fait que** la pièce de butée (6) est limitée, vers l'extérieur par une face frontale d'extrémité (64), écartée de la face interne (52) de la paroi mince déformable (50) par un léger jeu correspondant à une déformation maximale, dans le domaine élastique, de la paroi mince (50) sous l'effet d'une pression locale d'application de la bande (M), et sur laquelle vient prendre appui ladite paroi mince (50) en cas de pression excessive, ladite face frontale (64) étant percée d'un orifice (60) de passage avec jeu de l'élément mobile (22) du palpeur (2).

8. Rouleau de mesure selon l'une des revendications 6 et 7, **caractérisé par le fait que** la pièce de butée (6) est appliquée sur une face d'appui (33) parallèle à l'axe (10) du rouleau (1) et constituant le fond du logement (3) dans lequel est emboîté le couvercle (5).

9. Rouleau de mesure selon la revendication 8, **caractérisé par le fait que** la pièce de butée (6) est munie, au niveau du fond (33) du logement (3), d'une partie élargie formant une collerette (65) sur laquelle vient prendre appui la douille (53) d'encastrement du couvercle (5), dans la position enfoncée de celui-ci pour laquelle la face externe (51) de la paroi mince (50) est dans le prolongement de la face externe (11) du rouleau (1).

10. Rouleau de mesure selon la revendication 9, **caractérisé par le fait que** la face latérale interne (55) de la douille d'encastrement (53) du couvercle (5) est bordée par une rainure (57) ayant un fond annulaire qui vient prendre appui sur la collerette (65) de la pièce de butée (6), dans la position enfoncée du couvercle (5), l'extrémité (56) de la douille (53) restant séparée du fond (33) du logement (3) par un léger jeu (b).

11. Rouleau de mesure selon l'une des revendications 6 à 10, **caractérisé par le fait que** la douille (53) d'encastrement du couvercle (5) est enfoncée à force dans l'espace annulaire entre la pièce de butée (6) et la face latérale (34) du logement (3).

12. Rouleau de mesure selon l'une des revendications 6 à 11, **caractérisé par le fait que** la face latérale interne (55) de la douille (53) d'encastrement du couvercle (5) est collée par un liant adhésif sur la face latérale (62) de la pièce de butée (6).

13. Rouleau de mesure selon l'une des revendications 6 à 10, **caractérisé par le fait que** la face latérale interne (55) de la douille d'encastrement (53) et la face latérale (62) de la pièce de butée (6) sont munies de filetages conjugués, le couvercle de protection (5) étant vissé sur la pièce de butée (6).

14. Rouleau de mesure selon l'une des revendications 8 à 13, **caractérisé par le fait que** la pièce de butée (6) est fixée de façon amovible sur le fond (33) du logement (3) dans lequel est emboîté le couvercle (5).

15. Rouleau de mesure selon la revendication 14, **caractérisé par le fait que** le logement (3) de chaque couvercle (5) d'un capteur (C) comprend un lamage (32) ayant un fond annulaire (33) entourant un alésage central (31) dans lequel est monté le palpeur (2) et que la pièce de butée (6) est une pièce creuse en forme de cabochon ayant un évidement central placé dans le prolongement de l'alésage (31) et fermé par un fond (63) percé d'un orifice (60) de passage de l'élément mobile (22) du palpeur (2) et prenant appui sur une partie interne du fond annulaire (33) du lamage par une face annulaire d'extrémité (61) de façon à laisser, entre la face latérale (34) du lamage et la face latérale (62) de la pièce de butée (6), un espace annulaire d'emboîtement de la douille (53) d'encastrement du couvercle (5).

16. Rouleau de mesure selon la revendication 15, **caractérisé par le fait que** chaque palpeur (2) est introduit par l'intérieur du corps tubulaire (12) dans un alésage radial (31) et est monté sur une barrette de support (4) fixée de façon amovible sur le corps tubulaire (12) par des vis (41) qui débouchent dans le fond annulaire (33) du lamage (32) et que la face d'appui (61) de la pièce de butée (6) appliquée sur ledit fond (33) autour de l'alésage (14) de passage du palpeur (2), est munie d'alésages filetés dans lesquels s'engagent les vis (41) de fixation de la barrette (4) de support des palpeur (2), de façon à assurer la fixation simultanée de la barrette (33) et de l'ensemble des pièces de butée (6) réparties sur la longueur du rouleau, chaque couvercle (5) d'un capteur pouvant être démonté avec la pièce de butée correspondante (6) indépendamment des autres capteurs.

## Claims

1. Measuring roller (1) for measuring the distribution of stresses on a metal strip (M) travelling in a longitudinal direction and which is applied to said roller, the latter comprising a tubular body (12) rotatably mounted about an axis (10) perpendicular to the direction of travel, delimited by a cylindrical outer side (11) and carrying a plurality of measuring devices (2) responsive to local strip application pressure and each mounted in a housing (3) delimited by a side wall (34) centred about an axis (30) and closed, to the exterior, by a hollow part (5) in the form of a cover, comprising a base (50) having an outer side (51) and an inner side (52) and a peripheral part in the form of a cylindrical insert (53) having two side walls, external (54) and internal (55) respectively, and fitting into the housing (3) in a position such that the outer side (51) of the base (50) of the cover (5) is in line with the outer side (11) of the tubular body (12), each measuring device (2) being a feeler-type displacement transducer comprising a moving element (22) slidably mounted radially on a fixed element (21) and applied, towards the exterior, to the inner side (52) of the hollow part (5), said base (50) being constituted by an elastically deformable thin plate, **characterised in that** the outer side wall (54) of the insert (5) has a cylindrical profile identical to that of the side wall (34) of the housing (3), such that the cover (5) fits without play into said housing (3) and that the side walls (34) and (54) of the housing (3) and insert (53) respectively shall be maintained applied to one another over a sufficient height to ensure that said insert (53) constitutes a peripheral immobilising means capable of resisting the bending moments resulting from the pressure applied to the thin plate (50) by the strip (M), with no risk of detachment along the joint between the outer side (51) of the cover (5) and the outer side (11) of the tubular body (12).

2. Measuring roller according to claim 1, **characterised in that** the inner side wall (55) of the immobilising insert (53) is connected, via a rounded shoulder, to the inner side (52) of the deformable plate (50) on which the moving component (22) of the feeler (2) is supported.

3. Measuring roller according to claim 1, **characterised in that** each housing (3) comprises a radial bore (31) in which the feeler (2) is mounted and which leads to the centre of an annular surface (33) parallel to the axis (10) of the roller (1) and constituting the bottom of a counterbore (32) cut on the outer side (11) of the tubular body (12) and in which the cover (5) is fitted without play.

4. Measuring roller according to one of claims 1, 2, 3, **characterised in that** the height (h2) and thickness (e1) of the insert (53) are determined such that said insert (53) constitutes in itself, after fitting of the lid (5), a peripheral immobilising means for the base of the cover (5) constituting a thin plate (50).

5. Measuring roller according to one of claims 1, 2 and 3, **characterised in that** each cover (5) of a housing (3) is combined with a means (6) of permanently maintaining the application, one on the other, of the side walls (34) and (54) of the housing (3) and the insert (53) respectively.

6. Measuring roller according to claim 5, **characterised in that** the means for maintaining the mutual application of the faces (54) and (34) of the insert (53) and housing (3) respectively comprises a stop (6) placed in the housing (3) and extending over the interior of the insert (53) of the cover (5), said stop (6) being delimited by a side wall (62) having an identical profile, in cross section, to that of the inner side wall (55) of the insert (53), so as to provide, between said stop (6) and the side wall (34) of the housing (3), an annular space into which the insert (53) of the cover (5) fits without play, to the interior and to the exterior.

7. Measuring roller according to claim 6, **characterised in that** the stop (6) is delimited to the exterior by a front end face (64), separated from the inner side (52) of the thin deformable wall (50) by a slight play corresponding to a maximum deformation, in the elastic domain, of the thin wall (50) under the effect of local application pressure of the strip (M), and on which said thin wall (50) is supported in the event of excessive pressure, said front face (64) having a drilled hole (60) for the free passage of the moving component (22) of the feeler (2).

8. Measuring roller according to one of claims 6 and 7, **characterised in that** the stop (6) is applied to a bearing surface (33) parallel to the axis (10) of the roller (1) and constituting the bottom of the housing (3) in which the cover (5) fits.

9. Measuring roller according to claim 8, **characterised in that**, at the level of the bottom (33) of the housing (3), the stop (6) is provided with a widened portion forming a flange (65) on which the immobilising insert (53) of the cover (5) is supported in the depressed position of the latter wherein the outer side (51) of the thin wall (50) is in the extension of the outer side (11) of the roller (1).

10. Measuring roller according to claim 9, **characterised in that** the internal side wall (55) of the immobilising insert (53) of the cover (5) is bounded by a groove (57) having an annular base which is supported on the flange (65) of the stop (6), in the depressed position of the cover (5), the end (56) of the insert (53) remaining separated from the bottom (33) of the housing (3) by a slight clearance (b).

11. Measuring roller according to one of claims 6 to 10, **characterised in that** the immobilising insert (53) of the cover (5) is forced into the annular space between the stop (6) and the side wall (34) of the housing (3).

12. Measuring roller according to one of claims 6 to 11, **characterised in that** the internal side wall (55) of the immobilising insert (53) of the cover (5) is adhesively attached to the side wall (62) of the stop (6).

13. Measuring roller according to one of claims 6 to 10, **characterised in that** the internal side wall (55) of the immobilising insert (53) and the side wall (62) of the stop (6) are provided with mating threads, the protective cover (5) being screwed to the stop (6).

14. Measuring roller according to one of claims 8 to 13, **characterised in that** the stop (6) is detachably fixed to the bottom (33) of the housing (3) in which the cover (5) is fitted.

15. Measuring roller according to claim 14, **characterised in that** the housing (3) of each cover (5) of a displacement transducer (C) comprises a counterbore (32) having an annular base (33) surrounding a central bore (31) in which the feeler (2) is mounted and that the stop (6) is a hollow part in the form of a rounded block having a central recess placed in the extension of the bore (31) and closed by a base (63) with a drilled hole (60) for the passage of the moving component (22) of the feeler (2) and supported on an internal part of the annular base (33) of the counterbore by an annular end face (61) so as to leave, between the side wall (34) of the counterbore and the side wall (62) of the stop (6), an annular space for accommodating the immobilising insert (53) of the cover (5).

16. Measuring roller according to claim 15, **characterised in that** each feeler (2) is introduced via the interior of the tubular body (12) into a radial bore (31) and is mounted on a supporting bar (4) detachably fixed to the tubular body (12) by screws (41) which end in the annular base (33) of the counterbore (32) and that the bearing surface (61) of the stop (6) applied to said base (33) around the passage bore (14) of the sensor (2) is provided with threaded holes in which the screws (41) for fixing the supporting bar (4) of the sensor (2) engage, so as to ensure the simultaneous fixing of the bar (33) and of all the stops (6) distributed over the length of the roller, each displacement transducer cover (5) being demountable with the corresponding stop (6) independently of the other displacement transducers.

**Patentansprüche**

1. Rolle (1) zur Messung der Verteilung der Beanspruchungen an einem in Längsrichtung ablaufenden und an dieser Rolle anliegenden Band (M), wobei diese Rolle einen rohrförmigen Körper (12) umfasst, der um eine senkrecht zur Bandlaufrichtung liegende Achse (10) drehbar gelagert ist, durch eine zylindrische Außenfläche (11) begrenzt wird und eine Vielzahl von Messorganen (2) trägt, die empfindlich für einen lokalen Anpressdruck sind und jeweils in eine Aufnahme (3) eingebaut sind, die durch eine auf eine Achse (30) zentrierte Seitenfläche (34) begrenzt wird und nach außen mit einem deckelförmigen hohlen Teil (5) verschlossen wird, das einen Boden (50) mit einer Außenfläche (51) und einer Innenfläche (52) und ein Umfangsteil in Form einer zylindrischen Hülse (53), die zwei Seitenflächen, und zwar eine Außenfläche (54) und eine Innenfläche (55), umfasst und in einer Position in die Aufnahme (3) eingepasst ist, in der sich die Außenfläche (51) des Bodens (50) des Dekkels (5) in der Verlängerung der Außenfläche (11) des rohrförmigen Körpers (12) befindet, wobei jedes Messorgan (2) ein Wegaufnehmer vom Typ Tastkopf mit einem beweglichen Element (22) ist, das radial verschieblich in einem festen Element (21) gelagert ist und nach außen an die Innenseite (52) des Bodens (50) des hohlen Teils (5) angepresst wird, wobei der besagte Boden (50) aus einer elastisch verformbaren dünnen Platte besteht, **dadurch gekennzeichnet, dass** die äußere Seitenfläche (54) der Hülse (5) das gleiche zylindrische Profil wie die Seitenfläche (34) der Aufnahme (3) aufweist, sodass sich der Deckel (5) ohne Spiel in die Aufnahme (3) einpasst und die Seitenflächen gegenüber (34) der Aufnahme (3) und (54) der Hülse (53) über eine Höhe aneinander angepresst werden, die dazu ausreicht, dass die besagte Hülse (53) ein Steckmittel bildet, das in der Lage ist, den Biegemomenten zu widerstehen, die durch den Druck bedingt sind, der vom Band (M) auf die dünne Platte (50) ausgeübt wird, ohne dass die Gefahr des Ablösens entlang der Verbindungsstelle zwischen der Außenfläche (51) des Deckels (5) und der Außenseite (11) des rohrförmigen Körpers (12) besteht.

2. Rolle zur Messung nach Anspruch 1, **dadurch gekennzeichnet, dass** die innere Seitenfläche (55) der Steckhülse (53) über eine Ausrundung an die Innenfläche (52) der verformbaren Platte (50) anschließt, an der das bewegliche Element (22) des Tastkopfes (2) anliegt.

3. Rolle zur Messung nach Anspruch 1, **dadurch gekennzeichnet, dass** jede Aufnahme (3) eine radiale Bohrung (31) umfasst, in der der Tastkopf (2) gelagert ist und die in der Mitte einer ringförmigen Fläche (33) parallel zur Achse (10) der Rolle (1) mündet und den Boden einer Senkung (32) darstellt, die an der Außenfläche (11) des rohrförmigen Körpers (12) ausgebildet ist und in die der Deckel (5) ohne Spiel eingepasst wird.

4. Rolle zur Messung nach einem der Ansprüche 1, 2, 3, **dadurch gekennzeichnet, dass** die Höhe (h2) und die Dicke (e1) der Hülse (53) so bestimmt werden, dass die aus sich selbst bestehende Hülse (53) nach dem Einpassen des Deckels (5) ein Steckmittel für den Boden des Deckels (5) darstellt, der eine dünne Platte (50) bildet.

5. Rolle zur Messung nach einem der Ansprüche 1, 2, 3, **dadurch gekennzeichnet, dass** jeder Deckel (5) einer Aufnahme (3) mit einem Mittel (6) zum ständigen Aufrechterhalten des Aneinanderpressens der Seitenflächen gegenüber (34) der Aufnahme (3) und (54) der Hülse (53) kombiniert ist.

6. Rolle zur Messung nach Anspruch 5, **dadurch gekennzeichnet, dass** das Mittel zum Aufrechterhalten des Aneinanderpressens der Flächen gegenüber (54) der Hülse (53) und (34) der Aufnahme (3) ein Anschlagteil (6) umfasst, das in der Aufnahme (3) angeordnet ist und sich vorspringend in die Hülse (53) des Deckels (5) erstreckt, wobei das besagte Anschlagteil (6) durch eine Seitenfläche (62) begrenzt wird, die im Querschnitt das gleiche Profil wie die innere Seitenfläche (55) der Hülse (53) hat, sodass zwischen dem Anschlagteil (6) und der Seitenfläche (34) der Aufnahme (3) ein ringförmiger Raum ausgebildet wird, in den sich die Hülse (53) des Dekkels (5) nach innen und nach außen ohne Spiel einpasst.

7. Rolle zur Messung nach Anspruch 6, **dadurch gekennzeichnet, dass** das Anschlagteil (6) nach außen hin durch eine Vorderendfläche (64) begrenzt wird, die von der Innenfläche (52) der verformbaren dünnen Wand (50) durch ein geringfügiges Spiel beabstandet ist, das einer maximalen Verformung der dünnen Wand (50) im elastischen Bereich unter der Einwirkung des lokalen Anpressdrucks des Bandes (M) entspricht, und an der diese dünne Wand (50) bei übermäßigem Druck anliegt, wobei die Vorderfläche (64) mit einem Durchgangsloch (60) zum Durchführen des beweglichen Elements (22) des Tastkopfes (2) mit Spiel durchbohrt ist.

**8.** Rolle zur Messung nach einem der Ansprüche 6 und 7, **dadurch gekennzeichnet, dass** das Anschlagteil (6) an eine Anlagefläche (33) angepresst wird, die parallel zur Achse (10) der Rolle (1) liegt und den Boden der Aufnahme (3) bildet, in die der Deckel (5) eingepasst wird.

**9.** Rolle zur Messung nach Anspruch 8, **dadurch gekennzeichnet, dass** das Anschlagteil (6) auf Höhe des Bodens (33) der Aufnahme (3) mit einem aufgeweiteten Teil versehen ist, das einen Kragen (65) bildet, auf dem die Steckhülse (53) des Deckels (5) in dessen eingepresster Stellung aufliegt, in der die Außenfläche (51) der dünnen Wand (50) in der Verlängerung der Außenfläche (11) der Rolle (1) liegt.

**10.** Rolle zur Messung nach Anspruch 9, **dadurch gekennzeichnet, dass** die innere Seitenfläche (55) der Steckhülse (53) des Deckels (5) von einer Nut (57) mit ringförmigem Boden eingefasst ist, die in der eingepressten Stellung des Deckels (5) auf dem Kragen (65) des Anschlagteils (6) aufliegt, wobei das Ende (56) der Hülse (53) vom Boden (33) der Aufnahme (3) durch ein geringfügiges Spiel (b) getrennt bleibt.

**11.** Rolle zur Messung nach einem der Ansprüche 6 bis 10, **dadurch gekennzeichnet, dass** die Steckhülse (53) des Deckels (5) mit Kraft in den ringförmigen Raum zwischen dem Anschlagteil (6) und der Seitenfläche (34) der Aufnahme (3) gepresst wird.

**12.** Rolle zur Messung nach einem der Ansprüche 6 bis 11, **dadurch gekennzeichnet, dass** die innere Seitenfläche (55) der Steckhülse (53) des Deckels (5) mit einem haftenden Bindemittel auf die Seitenfläche (62) des Anschlagteils (6) geklebt wird.

**13.** Rolle zur Messung nach einem der Ansprüche 6 bis 10, **dadurch gekennzeichnet, dass** die innere Seitenfläche (55) der Steckhülse (53) und die Seitenfläche (62) des Anschlagteils (6) mit konjugiert ausgebildeten Gewinden versehen sind, wobei der Schutzdeckel (5) auf das Anschlagteil (6) geschraubt wird.

**14.** Rolle zur Messung nach einem der Ansprüche 8 bis 13, **dadurch gekennzeichnet, dass** das Anschlagteil (6) abnehmbar am Boden (33) der Aufnahme (3), in die der Deckel (5) eingepasst wird, befestigt ist.

**15.** Rolle zur Messung nach Anspruch 14, **dadurch gekennzeichnet, dass** die Aufnahme (3) jedes Deckels (5) eines Messaufnehmers (C) eine Senkung (32) mit einem ringförmigen Boden (33) umfasst, der eine mittige Bohrung (31) umgibt, in der der Tastkopf (2) gelagert ist, und dass das Anschlagteil (6) ein hohles Teil in Form einer Kappe mit einer mittigen Vertiefung in der Verlängerung der Bohrung (31) ist, das durch einen Boden (63) verschlossen wird, der von einem Durchgangsloch (60) zum Durchführen des beweglichen Elements (22) des Tastkopfes (2) durchbohrt ist und auf einem Innenteil des ringförmigen Bodens (33) der Senkung mit einer ringförmigen Endfläche (61) so aufliegt, dass zwischen der Seitenfläche (34) der Absenkung und der Seitenfläche (62) des Anschlagteils (6) ein ringförmiger Raum zum Einpassen der Steckhülse (53) des Deckels (5) gelassen wird.

**16.** Rolle zur Messung nach Anspruch 15, **dadurch gekennzeichnet, dass** jeder Tastkopf (2) von der Innenseite des rohrförmigen Körpers (12) aus in eine radiale Bohrung (31) eingeführt wird und an einer Halteleiste (4) angebracht ist, die am rohrförmigen Körper (12) abnehmbar mit Schrauben (41) befestigt ist, die in den ringförmigen Boden (33) der Senkung (32) münden, und dass die Anlagefläche (61) des auf diesem Boden (33) um die Bohrung (14) zum Durchführen des Tastkopfes (2) angepressten Anschlagteils (6) mit Gewindebohrungen versehen ist, in die die Schrauben (41) zum Befestigen der Halteleiste (4) des Tastkopfes (2) greifen, sodass die gleichzeitige Befestigung der Leiste (33) und aller Anschlagteile (6), die über die Länge der Rolle verteilt sind, gewährleistet ist, wobei jeder Deckel (5) eines Messaufnehmers mit dem entsprechenden Anschlagteil (6) unabhängig von den anderen Messaufnehmern ausgebaut werden kann.

FIG.1

FIG.3

FIG.2

FIG.4

FIG.5

**RÉFÉRENCES CITÉES DANS LA DESCRIPTION**

**Documents brevets cités dans la description**

- AT 370521 B
- JP 62047529 A
- EP 0262002 A1
- EP 028191 A
- EP 0270442 A
- EP 0028191 A